(19) Europäisches Patentamt
European Patent Office
Office européen des brevets

(11) **EP 2 200 311 A1**

(12) **EUROPEAN PATENT APPLICATION**
published in accordance with Art. 153(4) EPC

(43) Date of publication:
**23.06.2010 Bulletin 2010/25**

(21) Application number: **08839449.9**

(22) Date of filing: **24.09.2008**

(51) Int Cl.:
*H04N 7/18* (2006.01)  *B60R 1/00* (2006.01)
*B60R 11/02* (2006.01)  *G06T 1/00* (2006.01)

(86) International application number:
**PCT/JP2008/067151**

(87) International publication number:
**WO 2009/050987 (23.04.2009 Gazette 2009/17)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **18.10.2007 JP 2007271193**

(71) Applicant: **Sanyo Electric Co., Ltd.**
**Osaka 570-8677 (JP)**

(72) Inventors:
• **ASARI, Keisuke**
  **Katano-Shi**
  **Osaka 576-0036 (JP)**
• **ISHII, Yohei**
  **Osaka-Shi**
  **Osaka 536-0014 (JP)**

(74) Representative: **Glawe, Delfs, Moll**
**Patent- und Rechtsanwälte**
**Postfach 26 01 62**
**D-80058 München (DE)**

(54) **CAMERA CALIBRATION DEVICE AND METHOD, AND VEHICLE**

(57)    A camera calibration device performs camera calibration for projecting a plurality of camera images from a plurality of cameras onto a predetermined surface to combine them on the basis of the results after calibration patterns to be arranged in a common photographing area of the cameras are photographed by each of the cameras. The camera calibration device judges where or not the calibration patterns are observed by the cameras on the basis of the photographed results. If judging that the calibration patterns are not observed, the camera calibration device creates the content of an instruction to contain the calibration patterns in the common photographing area to allow the cameras to observe the contained calibration patterns on the basis of the photographed results and notifies the instruction content to an operator who is in charge of the arrangement operation of the calibration patterns.

FIG.11

OPERATOR ARRANGES CALIBRATION PATTERNS

S11 ACQUIRE CALIBRATION CAMERA IMAGES FROM CAMERAS

S12 DETECT CALIBRATION PATTERNS AND CHARACTERISTIC POINTS FROM CALIBRATION CAMERA IMAGES

S13 DO ADJACENT CAMERAS BOTH CAPTURE CORRESPONDING CALIBRATION PATTERN?

Y → S16 INDICATE COMPLETION OF ARRANGEMENT

N

S14 DETERMINE DIRECTION AND DISTANCE TO MOVE CALIBRATION PATTERNS

S15 INDICATE DIRECTION AND DISTANCE TO MOVE CALIBRATION PATTERNS (INDICATE INSTRUCTIONS)

EP 2 200 311 A1

**Description**

**Technical Field**

The present invention relates to a camera calibration device and a camera calibration method for carrying out camera calibration processing needed to project onto a predetermined plane and synthesize camera images from a plurality of cameras. The present invention also relates to a vehicle employing such a camera calibration device and a camera calibration method.

**Background Art**

In recent years, with increasing awareness for safety, more and more vehicles, such as automobiles, have come to be furnished with a camera (vehicle-mounted camera). Research has also been done on ways to present more human-friendly views by use of image processing technologies instead of simply displaying camera views. According to one such technology, a shot image is subjected to coordinate transformation to generate and display a bird's-eye view image as seen from above the ground plane. Displaying a bird's-eye view image allows a driver easy grasping of the surroundings of a vehicle.

There have also been developed driving assistance systems in which a plurality of camera images from a plurality of cameras are projected onto the ground plane and synthesized to generate and display on a display device an all-around bird's-eye view image (for example, see Patent Documents 1 to 3 listed below). Such driving assistance systems can provide a driver with an aerial view of the surrounding all around a vehicle, and thus have the advantage of covering 360 degrees around a vehicle without a dead angle.

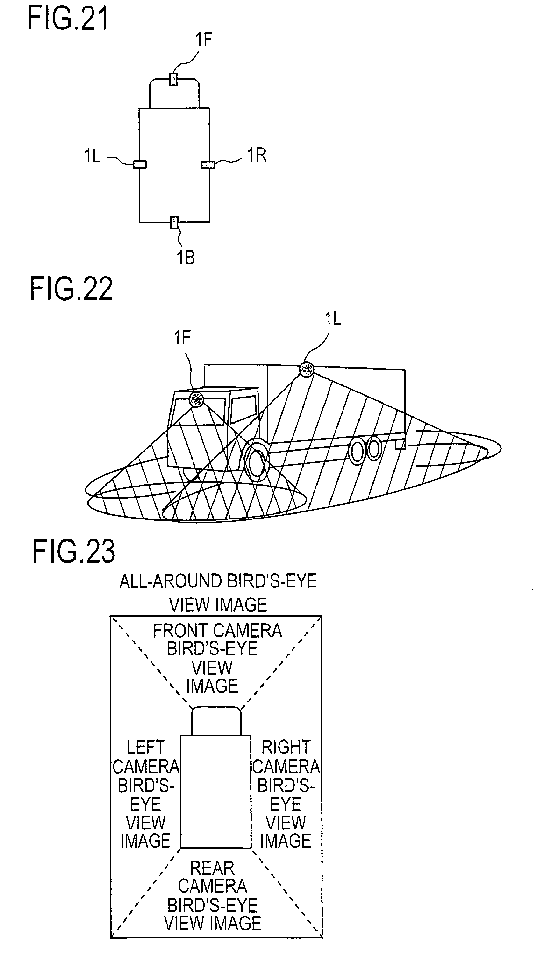

Fig. 21 is a plan view of a vehicle to which a driving assistance system of this type is applied, and Fig. 22 is a view of the vehicle as seen obliquely from the left front. At the front, rear (back), left, and right of the vehicle, there are installed a camera 1F as a front camera, a camera 1B as a rear camera, a camera 1L as a left camera, and a camera 1R as a right camera, respectively. In Fig. 22, the shooting regions of the cameras 1F and 1L are depicted as hatched regions. In this driving assistance system, through coordinate transformation, camera images from the individual cameras are projected onto the ground plane and synthesized to generate and display an all-around bird's-eye view image as a synthesized image. Fig. 23 is a schematic diagram of the all-around bird's-eye view image thus displayed. In the all-around bird's-eye view image in Fig. 23, on the front, right, left, and rear sides of the vehicle, there are shown bird's-eye view images based on the camera images of the cameras 1 F, 1R, 1L, and 1B, respectively.

The shot-image plane of a camera can be projected onto the ground plane by a technique based on perspective projection transformation, or by a technique based on planar projection transformation.

In perspective projection transformation, based on camera external information, such as the camera fitting angle and the camera installation height, and camera internal information, such as the camera focal length (or camera field angle), the transformation parameters for projecting a camera image onto a set plane (such as a road surface) are calculated. Accordingly, for accurate coordinate transformation, it is necessary to grasp the camera external information precisely. Although in many cases the camera fitting angle and the camera installation height are previously designed, errors are inevitable between their values as designed and those as observed at the time of actual installation on a vehicle, resulting in lower coordinate transformation accuracy. This leads to the problem of individual bird's-eye view images being unable to be smoothly joined together at their boundaries.

On the other hand, in planar projection transformation, a calibration pattern is arranged within a shooting region, and based on the calibration pattern as it is shot, the transformation matrix that represents the correspondence between the coordinates of individual points on a camera image and the coordinates of individual points on a bird's-eye view image is determined, an operation called calibration operation. The transformation matrix is generally called a homography matrix. Planar projection transformation does not require camera external information and camera internal information, and allows the corresponding coordinates between a camera image and a bird's-eye view image to be specified based on an actually shot calibration pattern; thus, planar projection transformation is not, or hardly, affected by camera installation errors.

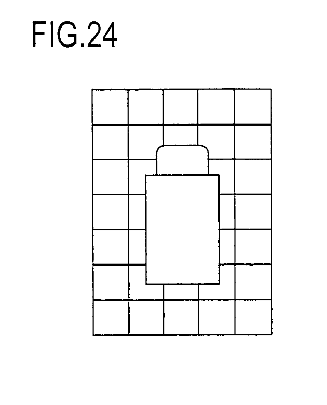

A homography matrix for projecting a camera image onto the ground plane can be calculated based on four or more characteristic points with known coordinates. To project a plurality of camera images from a plurality of cameras onto a common plane, however, the characteristic points used for all the cameras need to be provided on a common coordinate plane. Specifically, it is necessary to define a two-dimensional coordinate system common to all the cameras as shown in Fig. 24 and, on this two-dimensional coordinate system, specify the coordinates of four or more characteristic points for each camera.

Accordingly, in a case where a vehicle, such as a truck, is furnished with a plurality of cameras and camera calibration is carried out to obtain an all-around bird's-eye view image, it is necessary to prepare a very large calibration pattern, large enough to cover the shooting regions of all the cameras. In the example shown in Fig. 24, a lattice-like calibration pattern so large as to cover the shooting regions of all the cameras is placed around the vehicle, and intersections on the lattice are used as characteristic points. Such a calibration pattern is, for example, twice as large as the longitudinal and lateral dimensions of the vehicle. As a result, carrying out calibration operation takes a large space, and preparing an environment for calibration takes much trouble, resulting in an increased burden of calibration operation as a whole. For higher efficiency in calibration operation, therefore, simpler calibration methods have been sought.

Patent Document 1: JP-B-3372944
Patent Document 2: JP-A-2004-235986
Patent Document 3: JP-A-2006-287892

## Disclosure of the Invention

## Problems to be Solved by the Invention

An object of the present invention is to provide a camera calibration device and a camera calibration method that contribute to the simplification of calibration operation. Another object of the present invention is to provide a vehicle employing such a camera calibration device or a camera calibration method.

## Means for Solving the Problem

To achieve the above objects, according to the invention, a camera calibration device that performs camera calibration for projecting on a predetermined plane and synthesizing a plurality of camera images from a plurality of cameras based on the results of shooting, by the plurality of cameras, of a calibration pattern to be arranged in a common shooting region between the plurality of cameras is provided with: a checker which, based on the results of the shooting, checks the arrangement condition of the calibration pattern in the common shooting region; and an indication signal outputter which outputs an indication signal for indicating information according to the result of the checking by the checker to outside.

With this configuration, an operator who arranges a calibration pattern can perform the arrangement operation while receiving an indication as to the arrangement condition of the calibration pattern, and can thus arrange the calibration pattern correctly and easily.

Specifically, for example, when the camera images obtained from the cameras during the camera calibration are called calibration camera images, the checker checks, based on the calibration camera images, whether or not the calibration pattern is being captured by the plurality of cameras.

Specifically, for another example, if the checker judges that the calibration pattern is not being captured by the plurality of cameras, the checker creates, based on the calibration camera images, an instruction for bringing the calibration pattern within the common shooting region so that the calibration pattern is captured by the plurality of cameras, and the indication signal outputter outputs, as the indication signal, a signal for indicating, as the information, the instruction to outside.

For another example, the indication signal is fed to a sound output device so that an indication as to the information is given by sound output.

For another example, the indication signal is fed to a video display device so that an indication as to the information is given by video display.

For another example, the camera calibration device is further provided with: a wireless communicator which wirelessly communicates the indication signal to a portable terminal device, and an indication as to the information is given on the portable terminal device by at least one of sound output and video display.

To achieve the above objects, according to the invention, in a vehicle furnished with a plurality of cameras, an image synthesizer which generates a synthesized image by protecting onto a predetermined plane and synthesizing a plurality of camera images from the plurality of cameras, and a video display device which displays the synthesized image, the image synthesizer projects and synthesizes the plurality of camera images based on the result of camera calibration by a camera calibration device of any one of the configurations described above.

To achieve the above objects, according to the invention, a camera calibration method for performing camera calibration for projecting on a predetermined plane and synthesizing a plurality of camera images from a plurality of cameras based on the results of shooting, by the plurality of cameras, of a calibration pattern to be arranged in a common shooting region between the plurality of cameras includes: checking, based on the results of the shooting, the arrangement condition of the calibration pattern in the common shooting region, and indicating information according to the result of the checking to outside.

## Advantages of the Invention

According to the present invention, it is possible to provide a camera calibration device and a camera calibration method that contribute to simplification of calibration operation.

The significance and benefits of the invention will be clear from the following description of its embodiments. It should however be understood that these embodiments are merely examples of how the invention can be implemented, and that the meanings of the terms used to describe the invention and its features are not limited to the specific ones in which they are used in the description of the embodiments.

## Brief Description of Drawings

[Fig. 1] is a plan view, as seen from above, of a vehicle to which a driving assistance system according to one embodiment of the invention is applied, showing how the vehicle is furnished with cameras.

[Fig. 2] is a view of the vehicle in Fig. 1 as seen obliquely from the left front.

[Figs. 3](a) to (d) are diagrams showing the shooting regions of the cameras installed on the vehicle in Fig. 1.

[Fig. 4] is a diagram showing, in a form put together, the shooting regions of the cameras installed on the vehicle in Fig. 1.

[Fig. 5] is a configuration block diagram of a driving assistance system according to one embodiment of the invention.

[Fig. 6] is a plan view, as seen from above, of and around the vehicle in Fig. 1, showing how calibration patterns are arranged.

[Fig. 7] is a plan view of a plate forming a calibration pattern.

[Fig. 8] is a diagram showing bird's-eye view images corresponding to camera images from individual cameras in Fig 1.

[Fig. 9] is a diagram showing an all-around bird's-eye view image generated by the main controller 10 in Fig. 5.

[Fig. 10] is a flow chart showing a procedure for camera calibration according to one embodiment of the invention.

[Fig. 11] is a flow chart showing a flow of processing for deciding the arrangement positions of calibration patterns in Example 1 of the invention.

[Figs. 12](a) to (d) are diagrams showing individual camera images obtained at the stage of adjustment of the arrangement positions of calibration patterns.

[Fig. 13] is a diagram showing how calibration patterns and characteristic points are detected from one camera image.

[Fig. 14] is a diagram showing, on the same plane, one camera image (calibration camera image), characteristic points detected from the camera image, and characteristic points undetected from the camera image.

[Fig. 15] is a conceptual diagram showing how an indication as to the arrangement positions of calibration patterns is given in Example 1 of the invention.

[Fig. 16] is a diagram showing a modified example of the camera image in Fig. 12(a).

[Fig. 17] is a diagram showing another modified example of the camera image in Fig. 12(a).

[Fig. 18] is an external plan view of a portable terminal device to be carried around by an operator during camera calibration in Example 2 of the invention.

[Fig. 19] is a block diagram of the blocks concerned with the processing for determining the arrangement positions of calibration patterns in Example 3 of the invention.

[Fig. 20] is another block diagram of the blocks concerned with the processing for determining the arrangement positions of calibration patterns in Example 3 of the invention.

[Fig. 21] is a plan view of a vehicle to which a driving assistance system is applied according to a conventional technology.

[Fig. 22] is a view of the vehicle in Fig. 21 as seen obliquely from the left front.

[Fig. 23] is a diagram showing an all-around bird's-eye view image displayed in a driving assistance system according to a conventional technology.

[Fig. 24] is a diagram illustrating conventional calibration processing corresponding to planar projection transformation, showing a coordinate system (or a calibration pattern) defined to be shared among a plurality of cameras.

## List of Reference Symbols

| | |
|---|---|
| 10 | main controller |
| 11 | display device |
| 31 | calibration pattern/characteristic point detector |

| 32 | capturing condition checker |
| 33 | instruction creator |
| 34, 34a | indication signal outputter |
| 35 | sound output device |
| 36 | wireless communicator |
| 100 | vehicle |
| A1-A4 | calibration pattern |
| 1F, 1R, 1L, 1B | camera |
| 2F, 2R, 2L, 2B | shooting region |
| $3_{FR}$, $3_{FL}$, $3_{BR}$, $3_{BL}$, | common shooting region |
| 50F, 50R, 50L, 50B | bird's-eye view image |

## Best Mode for Carrying Out the Invention

Hereinafter, embodiments of the present invention will be described specifically with reference to the accompanying drawings. Among different drawings referred to in the course of description, the same parts are identified by the same reference signs, and in principle no overlapping description of the same parts will be repeated. Before the description of practical examples, namely Examples 1 to 3, first, such features as are common to, or are referred to in the description of, different practical examples will be described.

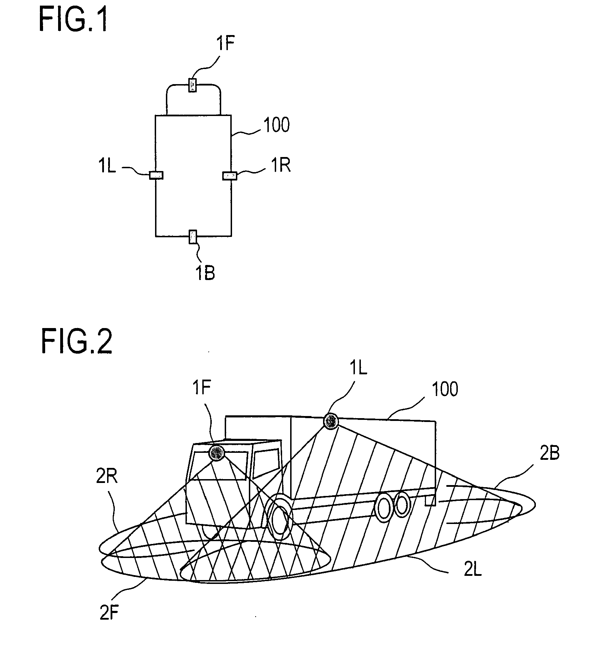

Fig. 1 is a plan view, as seen from above, of a vehicle 100 to which a driving assistance system according to one embodiment of the invention is applied, showing how the vehicle 100 is furnished with cameras. Fig. 2 is a view of the vehicle 100 as seen obliquely from the left front. Although Figs. 1 and 2 show a truck as the vehicle 100, the vehicle 100 may be any vehicle other than a truck (for example, a common passenger automobile). The vehicle 100 is placed on the ground plane (for example, a road surface). In the following description, it is assumed that the ground plane lies on the horizontal plane, and that a "height" is a height relative to the ground plane.

As shown in Fig. 1, at front, right, left, and rear (back) parts of the vehicle 100, there are fitted cameras (shooting devices) 1F, 1R, 1L, and 1B, respectively. In the embodiment under discussion, any one or more of the cameras 1F, 1R, 1L, and 1B may simply be called a camera or cameras whenever no distinction among them is necessary.

As shown in Fig. 2, the camera 1F is installed, for example, at the top of a rearview mirror of the vehicle 100, and the camera 1L is installed, for example, at a topmost part of the left side face of the vehicle 100. Though not illustrated in Fig. 2, the camera 1B is installed, for example, at a topmost part of the rear face of the vehicle 100, and the camera 1R is installed, for example, at a topmost part of the right side face of the vehicle 100.

The cameras 1F, 1R, 1L, and 1B are installed on the vehicle 100 in such a way that the optical axis of the camera 1F points frontward, obliquely downward relative to the vehicle 100, that the optical axis of the camera 1B points rearward, obliquely downward relative to the vehicle 100, that the optical axis of the camera 1L points leftward, obliquely downward relative to the vehicle 100, and the optical axis of the camera 1R points rightward, obliquely downward relative to the vehicle 100.

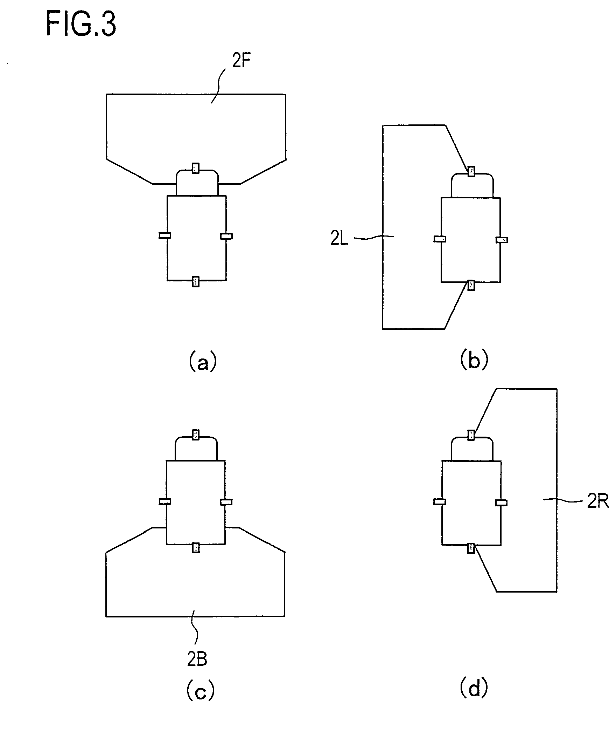

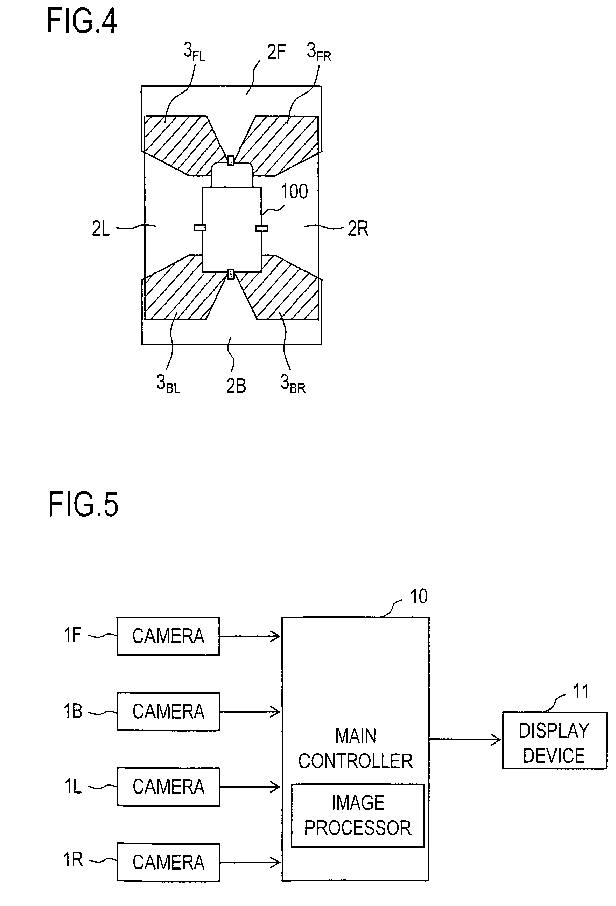

Fig. 2 shows the fields of view of the individual cameras, that is, the shooting regions of the cameras. The shooting regions of the cameras 1F, 1R, 1L, and 1B are represented by 2F, 2R, 2L, and 2B, respectively. It should be noted that, of the shooting regions 2R and 2B, only parts are illustrated in Fig. 2. Figs. 3(a) to (d) show the shooting regions 2F 2L, 2B, and 2R as seen from above, that is, the shooting regions 2F 2L, 2B, and 2R as they lie on the ground plane. Fig. 4 shows, in a form put together in a single drawing, the shooting regions shown in Figs. 3(a) to (d) (the hatched regions will be described later).

The camera 1F shoots a subject (including the road surface) present within a predetermined region in front of the vehicle 100. The camera 1R shoots a subject present within a predetermined region to the right of the vehicle 100. The camera 1L shoots a subject present within a predetermined region to the left of the vehicle 100. The camera 1B shoots a subject present within a predetermined region behind the vehicle 100.

The cameras 1F and 1L share, as part of the regions they respectively shoot, the same predetermined region obliquely to the left front of the vehicle 100. That is, in a predetermined region obliquely to the left front of the vehicle 100, the shooting regions 2F and 2L overlap. A region where the shooting regions of two cameras overlap is called a common shooting region. The region where the shooting regions of the cameras 1F and 1L overlap (that is, the common shooting region between the cameras 1F and 1L) is represented by $3_{FL}$. In Fig. 4, common shooting regions are depicted as hatched regions.

Likewise, as shown in Fig. 4, in a predetermined region obliquely to the right front of the vehicle 100, the shooting regions 2F and 2R overlap to form a common shooting region $3_{FR}$; in a predetermined region obliquely to the left rear of the vehicle 100, the shooting regions 2B and 2L overlap to form a common shooting region $3_{BL}$; and in a predetermined region obliquely to the right rear of the vehicle 100, the shooting regions 2B and 2R overlap to form a common shooting region $3_{BR}$.

Fig. 5 is a configuration block diagram of a driving assistance system according to one embodiment of the invention. The cameras (1F, 1R, 1L, and 1B) perform shooting, and feed signals representing the resulting images (hereinafter also referred to as the camera images) to a main controller 10 including an image processor. The main controller 10 transforms those camera images respectively into bird's-eye view images through viewpoint transformation, and synthesizes those bird's-eye view images to form a single all-around bird's-eye view image. A display device (video display device) 11 displays the all-around bird's-eye view image as video.

It is here assumed that the camera images as the basis of bird's-eye view images are subjected to image processing such as lens distortion correction and the camera images having undergone such image processing are transformed into bird's-eye view images. Once transformation parameters have been determined as will be described later, individual points on each camera image can be directly transformed into individual points on an all-around bird's-eye view image; it is then possible to omit the generation of individual bird's-eye view images (even then, it is possible to generate an all-around bird's-eye view image by way of transformation into individual bird's-eye view images). When the all-around bird's-eye view image is formed by image synthesis, the images corresponding to the common shooting regions are generated by averaging the pixel values between the images to be synthesized, or by joining together the to-be-synthesized images along defined synthesis boundaries. In either case, image synthesis is done in such a way that the individual bird's-eye view images are smoothly joined together at the boundaries.

A bird's-eye view image is obtained by transforming a camera image obtained by actual shooting by a camera (for example, the camera 1F) into an image as seen from the viewpoint (virtual viewpoint) of a virtual camera looking vertically down to the ground surface. This type of image transformation is generally also called viewpoint transformation. A bird's-eye view image corresponds to an image obtained by projecting a camera image onto the ground plane. Displaying an all-around bird's-eye view image, which corresponds to a synthesized image of a plurality of such bird's-eye view images, enhances a driver's field of view and makes it easy to check for safety around a vehicle.

Used as the cameras 1F, 1R, 1L, and 1B are, for example, cameras using a CCD (charge-coupled device) or cameras using a CMOS (complementary metal oxide semiconductor) image sensor. The main controller 10 comprises, for example, an integrated circuit. The display device 11 comprises a liquid crystal display panel or the like. A display device incorporated in a car navigation system or the like may be shared as the display device 11 in the driving assistance system. The main controller 10 may be incorporated in, as part of, a car navigation system. The main controller 10 and the display device 11 are installed, for example, near the driver's seat in the vehicle 100.

To assist safety check in a wide field of view, the cameras are given a wide field angle. Thus, the shooting region of each camera has a size of, for example, 5 m x 10 m on the ground plane.

To generate an all-around bird's-eye view image, transformation parameters are needed for generating it from individual camera images. Through camera calibration carried out prior to practical operation, the main controller 10 calibrates transformation parameters (in other words, it determines transformation parameters). In practical operation, by use of the calibrated transformation parameters, an all-around bird's-eye view image is generated from individual camera images.

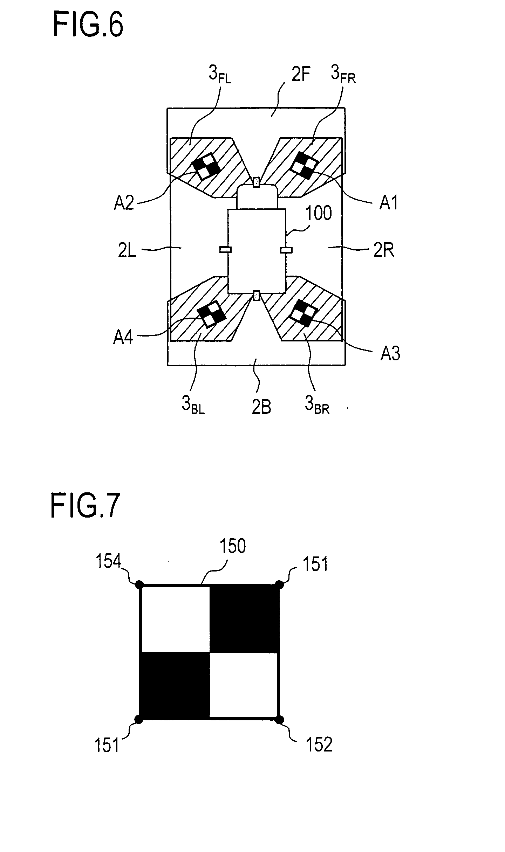

When camera calibration is carried out, within the shooting region of each camera, a calibration pattern smaller than the shooting region is arranged. Fig. 6 is a plan view, as seen from above, of and around the vehicle 100, showing how such calibration patterns are arranged.

As shown in Fig. 6, within the common shooting regions $3_{FR}$, $3_{FL}$, $3_{BR}$, and $3_{BL}$, there are arranged planar (two-dimensional) calibration patterns A1, A2, A3, and A4, respectively. The calibration patterns A1, A2, A3, and A4 are arranged on the ground plane.

The calibration patterns A1, A2, A3, and A4 each have a square shape, with each side of the square measuring about 1 m to 1.5 m. Although the calibration patterns A1, A2, A3, and A4 do not necessarily have the same shape, here, for the sake of convenience of description, they are assumed to have the same shape. The concept of "shape" here includes "size." Accordingly, the calibration patterns A1, A2, A3, and A4 are quite identical to one another. On bird's-eye view images, all the calibration patterns should ideally appear to have a square shape.

Since each calibration pattern has a square shape, it has four characteristic points. In the example under discussion, the four characteristic points are the four corners of the square shape. The main controller 10 previously knows the shape of each calibration pattern in the form of calibration pattern shape information. The calibration pattern shape information identifies the relative positional relationship among the four characteristic points of a calibration pattern (A1, A2, A3, or A4) as they should ideally appear on an all-around bird's-eye view image and on bird's-eye view images.

The shape of a calibration pattern denotes the shape of the figure formed by connecting together the characteristic points included in that calibration pattern. Fig. 7 is a plan view of a plate 150 forming a calibration pattern. In the example shown in Fig. 7, the calibration pattern is formed by drawing a geometric pattern on a flat plate 150 having a square shape. The points 151 to 154 located at the four corners of the calibration pattern (and hence the plate 150) in Fig. 7 function as characteristic points. The geometric pattern is drawn to facilitate the detection of the calibration pattern. For example, the entire region of the surface of the plate 150 is divided into four regions, namely top-right, bottom-right, bottom-left, and top-left regions, with the top-right and bottom-left regions colored white and the top-left and bottom-right regions colored black.

Appropriate selection of the color of the plate itself and the color of the geometric pattern drawn on it enables the main controller 10 to recognize, through edge extraction processing or the like, the characteristic points of the calibration pattern in clear distinction from a road surface etc. In the following description of the embodiment under discussion, the plate will be ignored, with attention paid only to the calibration pattern.

In camera calibration, each calibration pattern is arranged in such a way as to lie within the corresponding common shooting region, but the position at which each calibration pattern is arranged within the corresponding common shooting region is arbitrary. Specifically, for example, so long as the calibration pattern A1 lies within the common shooting region $3_{FR}$, the arrangement position of the calibration pattern A1 is arbitrary, and the arrangement position of the calibration pattern A1 within the common shooting region $3_{FR}$ can be decided independently, regardless of the arrangement positions of the calibration patterns A2 to A4. The same is true with the calibration patterns A2 to A4. Thus, when carrying out camera calibration, the operator has simply to arrange the calibration patterns within their respective common shooting regions casually, without giving special attention to their arrangement positions. This makes calibration operation far easier than by a conventional technique like one corresponding to Fig. 24.

[Technique for generating an all-around bird's-eye view image and technique for camera calibration]

Next, a technique for generating an all-around bird's-eye view image will be described more specifically, and a technique for camera calibration will also be described. In the course of description, the correspondence among individual points on camera images, individual points on bird's-eye view images, and individual points on an all-around bird's-eye view image will be explained.

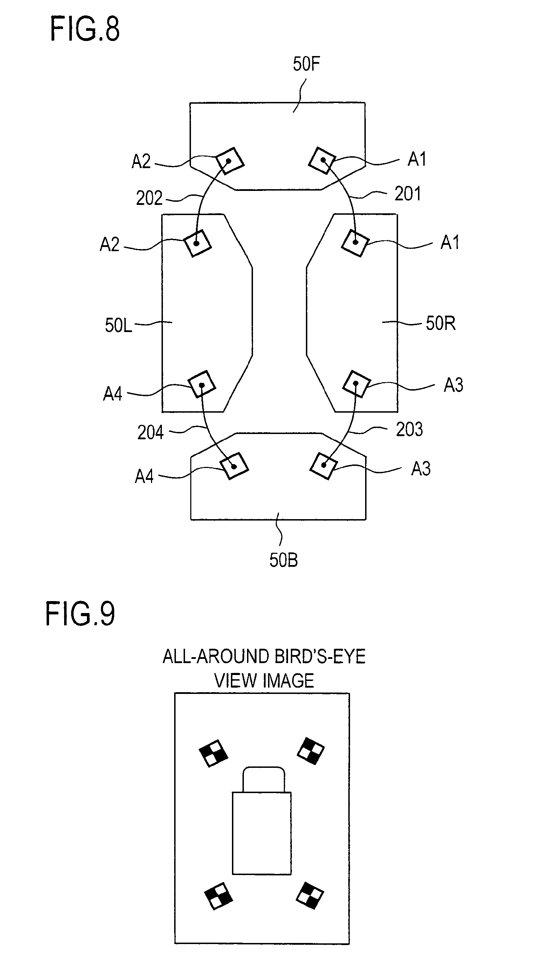

The coordinates of individual points on the camera images of the cameras 1F, 1R, 1L, and 1B are represented by $(x_1, y_1)$, $(x_2, y_2)$, $(x_3, y_3)$, and $(x_4, y_4)$, respectively. Fig. 8 shows bird's-eye view images corresponding to the camera images of the individual cameras. The bird's-eye view images corresponding to the camera images of the cameras 1F, 1R, 1L, and 1B are represented by 50F, 50R, 50L, and 50B. In the bird's-eye view images shown in Fig. 8, the calibration patterns (A1 to A4) as they appear on their respective bird's-eye view images are shown. To avoid complicated illustration, in Fig. 8, the geometric pattern of the calibration patterns are omitted from illustration.

The coordinates of individual points on the bird's-eye view images 50F, 50R, 50L, and 50B are represented by $(X_1, Y_1)$, $(X_2, Y_2)$, $(X_3, Y_3)$, and $(X_4, Y_4)$, respectively. The relationship between coordinates $(x_n, y_n)$ on the camera images and coordinates $(X_n, Y_n)$ on the bird's-eye view images is expressed, by use of a homography matrix $H_n$, by formula (1) below. Here, n is 1, 2, 3, or 4, and represents the number of the camera in question. The homography matrix $H_n$ can be determined by use of planar projection transformation or perspective projection transformation. The homography matrix $H_n$ is a matrix of three rows and three columns, and the individual elements of the homography matrix $H_n$ are represented by $h_{n1}$ to $h_{n9}$. It is here assumed that $h_{n9} = 1$ (the matrix is normalized such that $h_{n9} = 1$). Based on formula (1), the relationship between coordinates $(x_n, y_n)$ and coordinates $(X_n, Y_n)$ can also be expressed by formulae (2a) and (2b) below.

[Formula 1]

$$\begin{pmatrix} X_n \\ Y_n \\ 1 \end{pmatrix} = H_n \begin{pmatrix} x_n \\ y_n \\ 1 \end{pmatrix} = \begin{pmatrix} h_{n1} & h_{n2} & h_{n3} \\ h_{n4} & h_{n5} & h_{n6} \\ h_{n7} & h_{n8} & h_{n9} \end{pmatrix} \begin{pmatrix} x_n \\ y_n \\ 1 \end{pmatrix}$$

$$= \begin{pmatrix} h_{n1} & h_{n2} & h_{n3} \\ h_{n4} & h_{n5} & h_{n6} \\ h_{n7} & h_{n8} & 1 \end{pmatrix} \begin{pmatrix} x_n \\ y_n \\ 1 \end{pmatrix} \qquad (1)$$

[Formula 2]

$$X_n = \frac{h_{n1}x_n + h_{n2}y_n + h_{n3}}{h_{n7}x_n + h_{n8}y_n + 1} \tag{2a}$$

$$Y_n = \frac{h_{n4}x_n + h_{n5}y_n + h_{n6}}{h_{n7}x_n + h_{n8}y_n + 1} \tag{2b}$$

To synthesize the bird's-eye view images, they are subjected to solid body transformation. The solid body transformation is performed such that the positions of mutually corresponding calibration patterns largely coincide on the all-around bird's-eye view image. Specifically, for example, the bird's-eye view images 50F and 50R are, through solid body transformation, so positioned that the calibration pattern A1 on the bird's-eye view image 50F and the calibration pattern A1 on the bird's-eye view image 50R overlap (see Fig. 8). Solid body transformation is achieved by translation and rotation.

In Fig. 8, curves 201, 202, 203, and 204 indicate the correspondence between the calibration patterns between the different bird's-eye view images, and conceptually show how solid body transformation is performed for each calibration pattern. The main controller 10 previously know the correspondence among the calibration patterns and characteristic points as shot by the different cameras. Specifically, for example, it previously knows which calibration patterns and characteristic points included in the camera image of the camera 1F correspond to which calibration patterns and characteristic points included in the camera image of the camera 1R (or 1L). The same is true between the other cameras. This permits solid body transformation as described above.

The translation matrices representing the translation with respect to the bird's-eye view images 50F, 50R, 50L, and 50B are represented by $T_1$, $T_2$, $T_3$, and $T_4$, respectively, and the rotation matrices representing the rotation with respect to the bird's-eye view images 50F, 50R, 50L, and 50B are represented by $R_1$, $R_2$, $R_3$, and $R_4$, respectively.

Then, when the coordinates of individual points on the all-around bird's-eye view image are represented by (X', Y'), the coordinates $(x_n, y_n)$ of individual points on the camera images are transformed into coordinates (X', Y') on the all-around bird's-eye view image by use of a homography matrix $H_n'$ according to formulae (3a) and (3b) below. The translation matrix $T_n$ and the rotation matrix $R_n$ are represented by formulae (4a) and (4b) below. The individual elements of the homography matrix $H_n'$ are represented by formula (5) below.

[Formula 3]

$$\begin{pmatrix} X' \\ Y' \\ 1 \end{pmatrix} = H_n' \begin{pmatrix} x_n \\ y_n \\ 1 \end{pmatrix} \tag{3a}$$

$$H_n' = T_n R_n H_n \tag{3b}$$

[Formula 4]

$$T_n = \begin{pmatrix} 1 & 0 & t_{n1} \\ 0 & 1 & t_{n2} \\ 0 & 0 & 1 \end{pmatrix} \quad (4a)$$

$$R_n = \begin{pmatrix} r_{n1} & r_{n2} & 0 \\ r_{n3} & r_{n4} & 0 \\ 0 & 0 & 1 \end{pmatrix} \quad (4b)$$

[Formula 5]

$$H_n' = \begin{pmatrix} h_{n1}' & h_{n2}' & h_{n3}' \\ h_{n4}' & h_{n5}' & h_{n6}' \\ h_{n7}' & h_{n8}' & 1 \end{pmatrix} \quad (5)$$

The homography matrix $H_n'$ is a set of transformation parameters for generating an all-around bird's-eye view image corresponding to an image obtained by projecting onto the road surface and synthesizing all the camera images. Once the homography matrix $H_n'$ is determined, an all-around bird's-eye view image can be obtained by transforming the coordinates $(x_n, y_n)$ of points on the individual camera images into coordinates $(X', Y')$ on the all-around bird's-eye view image according to formula (3a). Fig. 9 shows an example of the all-around bird's-eye view image thus obtained. As shown in Fig. 9, an image obtained by setting a video of the vehicle 100 into the obtained all-around bird's-eye view image is displayed on the display device 11 in Fig. 5.

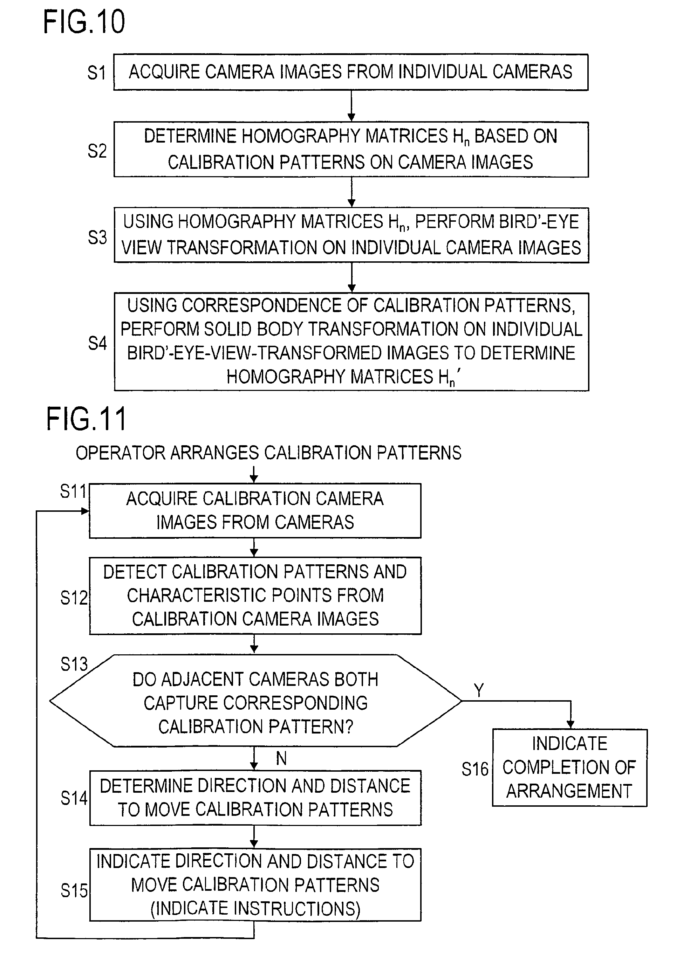

Fig. 10 shows a procedure for camera calibration, that is, a procedure for determining the homography matrix $H_n'$. Fig. 10 is a flow chart of that procedure. Camera calibration is achieved by performing the processing at steps S1 through S4. The processing at step S1 is executed by each camera and the main controller 10, and the processing at steps S2 through S4 is executed by the main controller 10.

First, at step S1, with the calibration patterns arranged within their respective common shooting regions as described above (see Fig. 6), the cameras are made to perform shooting, so that the main controller 10 obtains the camera images from the cameras.

Next, at step S2, the homography matrix $H_n$ for performing bird'-eye view transformation on the camera images is determined. Bird'-eye view transformation denotes processing for transforming camera images into bird's-eye view images. A technique for determining the homography matrix $H_1$ will now be described.

As by applying edge extraction processing or the like on the camera image of the camera 1F obtained at step S1, the main controller 10 detects the four characteristic points of the calibration pattern A1 on that camera image, and thereby identifies the coordinates of those four characteristic points. The coordinates of the thus identified four points are represented by $(X_{A1a}, Y_{A1a})$, $(X_{A1b}, Y_{A1b})$, $(x_{A1c}, y_{A1c})$, and $(x_{A1d}, y_{A1d})$, respectively. Moreover, according to the previously known calibration pattern shape information, the coordinates of the four characteristic points of the calibration pattern A1 on the bird's-eye view image corresponding to the camera 1F are determined. The coordinates of the thus determined four points are represented by $(X_{A1a}, Y_{A1a})$, $(X_{A1b}, Y_{A1b})$, $(X_{A1c}, Y_{A1c})$, and $(X_{A1d}, Y_{A1d})$, respectively. Since the calibration pattern A1 has a square shape, the coordinates $(X_{A1a}, Y_{A1a})$, $(X_{A1b}, Y_{A1b})$, $(X_{A1c}, Y_{A1c})$, and $(X_{A1d}, Y_{A1d})$ can be defined to be, for example, (0, 0), (1, 0), (0, 1), and (1, 1), respectively.

Once the correspondence of the coordinates of the four points between the camera image and the bird's-eye view image is known, the homography matrix $H_1$ can be determined. Techniques for determining a homography matrix (projection transformation matrix) based on the correspondence of the coordinates of four points are well known, and therefore no detailed description will be given in this respect. For example, the technique disclosed in JP-A-2004-342067 (in particular, the one disclosed in paragraphs [0059] to [0069] of this document) can be used. It is also possible to determine the homography matrix $H_1$ from the coordinates of the four characteristic points of the calibration pattern A2.

While the above description deals with a technique for calculating a homography matrix with attention paid to $H_1$, the other homography matrices $H_2$ to $H_4$ can be calculated in similar manners. Once the homography matrix $H_n$ is determined, according to formulae (2a) and (2b), any point on the camera images can be transformed into a point on bird's-eye view images.

Subsequently to step S2, at step S3, by use of the homography matrices $H_n$ determined at step S2, the camera images obtained at step S1 are subjected to bird's-eye view transformation, and thereby bird's-eye view images (a total of four of them) are generated.

Then, at step S4, the bird's-eye view images obtained at step S3 are, through solid body transformation (translation and rotation), so positioned that the coordinates of mutually corresponding calibration patterns coincide. It is here assumed that the bird's-eye view images obtained by performing bird'-eye view transformation on the camera images of the cameras 1F, 1R, 1L, and 1 B obtained at step S1 are the bird's-eye view images 50F, 50R, 50L, and 50B shown in Fig. 8.

Specifically, for example, with the bird's-eye view image 50F taken as the reference, the bird's-eye view image 50R is subjected to solid body transformation such that the calibration pattern A1 on the bird's-eye view image 50F and the calibration pattern A1 on the bird's-eye view image 50R overlap, and in addition the bird's-eye view image 50L is subjected to solid body transformation such that the calibration pattern A2 on the bird's-eye view image 50F and the calibration pattern A2 on the bird's-eye view image 50L overlap. Furthermore, thereafter, the bird's-eye view image 50B is subjected to solid body transformation such that the calibration patterns A3 and A4 on the bird's-eye view image 50B and the calibration patterns A3 and A4 on the bird's-eye view images 50R and 50L having undergone solid body transformation overlap. Then, by use of the translation matrices $T_n$ and rotation matrices $R_n$ used in those sessions of solid body transformation and the homography matrices $H_n$ determined at step S2, the homography matrices $H_n'$ are calculated according to formula (3b) above.

Through the processing at steps S1 through S4, the homography matrices $H_n'$ are determined. In the process of projecting the camera images onto the ground plane and generating the bird's-eye view images, there may often arise projection errors (positional errors from ideal projection positions) due to many error factors. Accordingly, after the processing at step S4, optimization processing may be performed to determine definitive homography matrices $H_n'$. The optimization processing is achieved, for example, by minimizing the sum of the projection errors of all the characteristic points.

After the homography matrices $H_n'$ are determined, according to formula (3a) above, an all-around bird's-eye view image can be generated from the camera images. In practice, for example, beforehand, according to the homography matrices $H_n'$, table data is created that defines the correspondence between coordinates $(x_n, y_n)$ on the camera images and coordinates $(X', Y')$ on the all-around bird's-eye view image, so that the table data is previously stored in an unillustrated memory (lookup table). Then, in practical operation after camera calibration, by use of the table data, an all-around bird's-eye view image is generated from the camera images.

In the manner described above, the homography matrices $H_n'$ are determined. In determining them, it is necessary to arrange the calibration patterns correctly in the common shooting regions between every two adjacent cameras. This arrangement operation is performed by an operator who carries out camera calibration.

One possible technique for the arrangement operation is a trial-and-error one in which the operator repeatedly arrange and rearrange the calibration patterns while checking whether they are captured by the corresponding cameras until all the characteristic points are correctly captured by the cameras. To be sure, by seeing the directions of the cameras, it is possible to roughly grasp where the common shooting regions lie; it is however difficult to grasp them accurately, and this often requires repeated operation as just mentioned. Such repeated operation increases the burden on the operator. In particular, in cases where camera calibration is carried out with respect to large vehicles, the calibration operation is troublesome.

To alleviate the trouble of calibration operation, the main controller 10 in Fig. 5 notifies the operator whether or not each calibration pattern is arranged within the corresponding common shooting region and is being captured by the corresponding two cameras and, if not, how the calibration pattern should be moved from its current position. As practical examples for describing the processing, or configuration, for achieving that, Examples 1 to 3 will now be described.

<<Example 1>>

First, Example 1 will be described. Fig. 11 is a flow chart of the flow of processing for deciding the arrangement positions of the calibration patterns. In Example 1, the operation of arranging the calibration patterns is assisted by guidance using sound. The processing at step S11 in Fig. 11 is executed by each camera and the main controller 10, and the processing at steps S12 through S 14 is executed by the main controller 10. What block or part performs the processing at steps S 15 and S16 will be discussed later. The processing at steps S11 through S16 is executed before the processing at step S2 in Fig. 10 is performed; after step S16 is reached, the processing at steps S2 through S4 in Fig. 10 (or the processing at steps S1 to S4) is executed.

The processing at each step shown in Fig. 11 will now be described. When the operator has arranged the calibration patterns around the vehicle 100, step S11 is reached. At this time, taking the directions of the cameras etc. into consideration, the operator arranges the calibration patterns in such a way that the calibration patterns A1, A2, A3, and A4 lie within the common shooting regions $3_{FR}$, $3_{FL}$, $3_{BR}$, and $3_{BL}$, respectively (see Fig. 6). In practice, however, it often occurs, at this stage, that not all the calibration patterns lie within the corresponding common shooting regions.

At step S11, each camera performs shooting, so that the main controller 10 acquires the camera image from each camera. The camera image obtained here is called the calibration camera image. As the calibration camera image, one image after another is acquired successively at a predetermined cycle. Considering the time scale of the operator's operation - moving the calibration patterns while listening to sound guidance -, the image acquisition cycle here does not need to be as fast as a common video rate (30 frames per second).

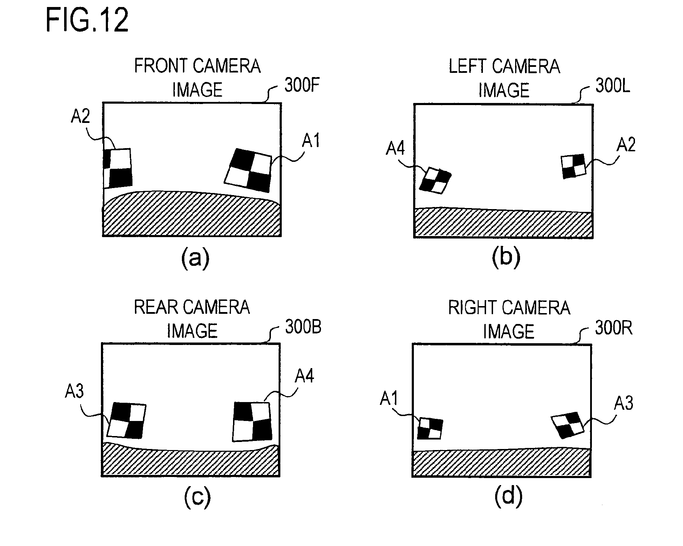

Suppose now that calibration camera images as shown in Figs. 12(a), (b), (c), and (d) have been obtained. The images 300F, 300L, 300B, and 300R shown in Figs. 12(a), (b), (c), and (d) are, respectively, the calibration camera image of the camera 1F as a front camera, the calibration camera image of the camera 1L as a left camera, the calibration camera image of the camera 1B as a rear camera, and the calibration camera image of the camera 1R as a right camera. The hatched regions in the images 300F, 300L, 300B, and 300R are where the body of the vehicle 100 is depicted. In each of the calibration camera images 300L, 300B, and 300R, the two entire calibration patterns are correctly depicted. By contrast, in the calibration camera image 300F, whereas the entire calibration pattern A1 is depicted, part of the calibration pattern A2 is not depicted. It should be noted that, on camera images including calibration camera images, the exterior shape of the calibration patterns, namely the square shape, appears distorted.

Subsequently to step S11, at step S12, by edge extraction, pattern matching, or the like, the calibration patterns and characteristic points are detected from the individual calibration camera images.

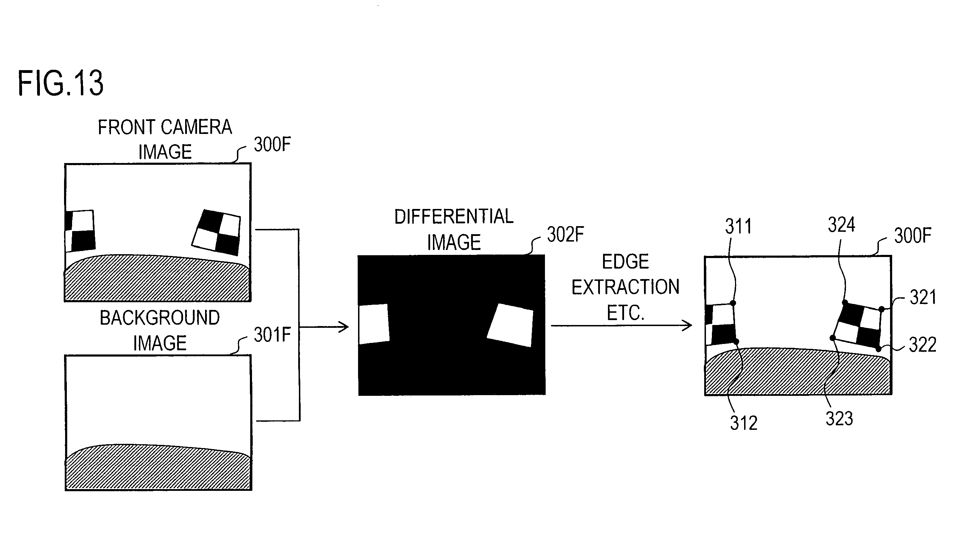

Now, a supplementary description will be given of the technique for the processing at step S12, taking up as an example a case where the calibration patterns and characteristic points within the calibration camera image 300F are to be detected. Fig. 13 will be referred to. Prior to the execution of the processing shown in Fig. 11, with no calibration patterns arranged around the vehicle 100, the camera images of the individual cameras are acquired as background images, and the data of these background images is saved in a memory (unillustrated) within the driving assistance system. In Fig. 13, the image 301F is the background image of the camera 1F. At step S12, the difference between the calibration camera image 300F and the background image 301F is calculated, thereby to generate a differential image 302F between the two images. The differential image 302F shown in Fig. 13 is a binary image, with the region where the density value is zero appearing black and the region where the density value is non-zero appearing white. By estimating the region where the density value is non-zero to be the region where the calibration patterns appear, the positions of the calibration patterns within the calibration camera image 300F are detected. Thereafter, by subjecting the calibration camera image 300F to image processing such as edge extraction or pattern matching with the detected positions of the calibration patterns taken as the reference, the individual characteristic points of the calibration patterns on the calibration camera image 300F are detected. That is, the coordinates of the individual characteristic points on the calibration camera image 300F are detected.

Consider now a case in which, as shown in Fig. 13, while the number of characteristic points on the calibration pattern A1 detected from the calibration camera image 300F is four, the number of characteristic points on the calibration pattern A2 detected from the calibration camera image 300F is two. The four characteristic points on the calibration pattern A1 detected from the calibration camera image 300F will be referred to as the characteristic points 321 to 324. The line segment connecting together the characteristic points 321 and 322, the line segment connecting together the characteristic points 322 and 323, the line segment connecting together the characteristic points 323 and 324, and the line segment connecting together the characteristic points 324 and 321 correspond to the four sides of the square shape as the exterior shape of the calibration pattern A1. The two characteristic points on the calibration pattern A2 detected from the calibration camera image 300F will be referred to as the characteristic points 311 and 312. The line segment connecting together the characteristic points 311 and 312 corresponds to one side of the square shape as the exterior shape of the calibration pattern A2.

With respect to the other calibration camera images, similar processing is performed, so that the individual characteristic points on the calibration camera images 300L, 300B, and 300R are detected. Suppose here as follows: from the calibration camera image 300L, a total of eight characteristic points of the calibration patterns A2 and A4 are detected; from the calibration camera image 300B, a total of eight characteristic points of the calibration patterns A3 and A4 are detected; and from the calibration camera image 300R, a total of eight characteristic points of the calibration patterns A1 and A3 are detected.

After the processing at step S12 in Fig. 11, an advance is made to step S13. At step S13, based on the calibration camera images, it is checked whether or not two adjacent cameras are both capturing the corresponding calibration pattern. This check is made with respect to all the calibration patterns. Adjacent cameras denotes two cameras that share a common shooting region. It is here assumed that the installation positions of the individual cameras on the vehicle 100 are largely prescribed, and that, based on the positional relationship among the cameras etc., the driving assistance system previously knows which calibration patterns lie whereabouts on the individual calibration camera images. For example, the driving assistance system recognizes a characteristic point detected in the left half region of the calibration camera image 300F to be a characteristic point on the calibration pattern A2, and recognizes a characteristic point detected in the right half region of the calibration camera image 300F to be a characteristic point on the calibration pattern A1.

The check at step S13 is achieved by comparing the number of characteristic points captured by both of adjacent cameras with the number of characteristic points that should ideally be captured. In the embodiment under discussion, the number of characteristic points that should ideally be captured is the total number (namely, four) of characteristic points on one calibration pattern. More specifically, it is checked whether or not the following conditions, namely a first to a fourth condition, are met.

The first condition is that the numbers of characteristic points of the calibration pattern A1 detected from the calibration camera images 300F and 300R respectively are both four.

The second condition is that the numbers of characteristic points of the calibration pattern A2 detected from the calibration camera images 300F and 300L respectively are both four.

The third condition is that the numbers of characteristic points of the calibration pattern A3 detected from the calibration camera images 300B and 300R respectively are both four.

The fourth condition is that the numbers of characteristic points of the calibration pattern A4 detected from the calibration camera images 300B and 300L respectively are both four.

If the first to fourth conditions are all met, an advance is made from step S13 to step S16, where the completion of the arrangement of the calibration patterns is indicated to the operator by sound (see Fig. 11). Thereafter, the processing at steps S2 through S4 (or the processing at steps S1 through S4) in Fig. 10 is executed.

By contrast, if any of the first to fourth conditions is not met, an advance is made from step S13 to step S 14 (see Fig. 11). In the example shown in Figs. 12(a) and (b) and Fig. 13, while the first, third, and fourth conditions are met, the second condition is not met; thus an advance is made to step S14. The sound output at step S16, and also at step S15 described later, is effected by a sound output device (unillustrated) provided within, or outside, the driving assistance system. This sound output device is controlled by the main controller 10.

At step S14, the direction and distance in and over which to move a calibration pattern so that the corresponding pair of adjacent cameras can capture it are derived. The direction and distance thus derived are those in the real space. The derivation here is performed based on the calibration camera images. In the following description, characteristic points detected from the calibration camera images at step S12 are also called "detected characteristic points," and characteristic points that are supposed to be detected but are not actually detected from the calibration camera images at step S12 are also called "undetected characteristic points."

At step S 14, by use of the calibration camera image of any camera that is not capturing the whole of any calibration pattern, based on the positions of the detected characteristic points on that calibration camera image, the positions at which undetected characteristic points are supposed to be located are estimated. Then, based on the thus estimated positions, the direction and distance to move the calibration pattern are derived. In the example under discussion, the camera 1F is not capturing the whole of the calibration pattern A2. Accordingly, by use of the calibration camera image 300F of the camera 1F, the direction and distance in and over which to move the calibration pattern A2 are derived.

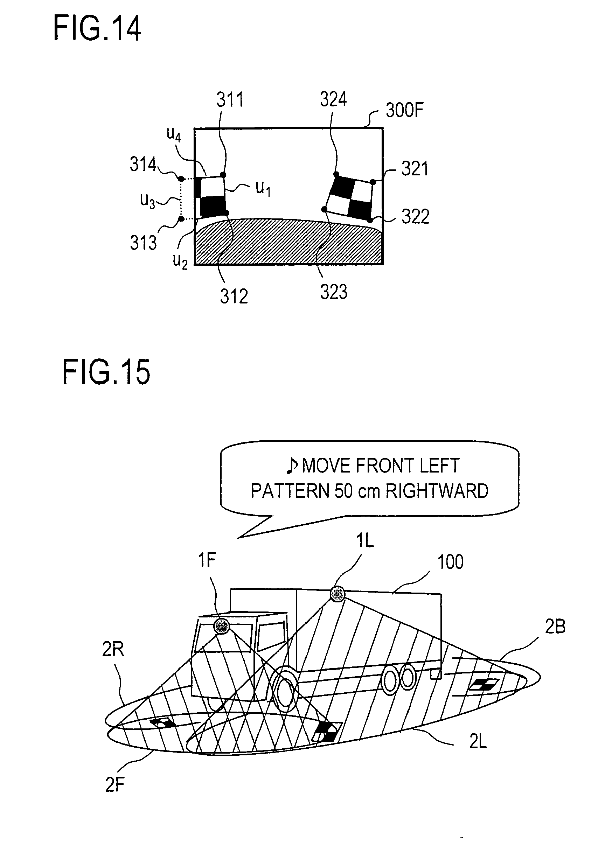

A method for this derivation will now be described more specifically with reference to Fig. 14. Fig. 14 is a diagram obtained by adding, as undetected characteristic points, the characteristic points 313 and 314 to the calibration camera image 300F. Though not included in the calibration camera image 300F, the characteristic points 313 and 314, as they are arranged on the same plane as the calibration camera image 300F, are taken into consideration. The line segment connecting together the characteristic points 311 and 312, the line segment connecting together the characteristic points 312 and 313, the line segment connecting together the characteristic points 313 and 314, and the line segment connecting together the characteristic points 314 and 311 will be called line segments $u_1$, $u_2$, $u_3$, and $u_4$, respectively. The line segments $u_1$ to $u_4$ correspond to the four sides of the square shape as the exterior shape of the calibration pattern A2.

Under the restraining conditions that line segments $u_2$ and $u_4$ are each perpendicular to line segment $u_1$, and that the characteristic points 313 and 314 are located outside the calibration camera image 300F, the positions of the characteristic points 313 and 314 are estimated.

For example, the distance $d_A$ between the characteristic points 311 and 312 on the calibration camera image 300F is determined; the characteristic point 313 is estimated to be located at a distance of $d_A$ from the characteristic point 312, and the characteristic point 314 is estimated to be located at a distance of $d_A$ from the characteristic point 311.

Instead, in a case where the installation conditions (installation heights and angles of depression) of the individual cameras are prescribed to a certain extent, based on those installation conditions, the characteristics of the cameras, and the length of each side of the calibration patterns in the real space, the lengths of line segments $u_2$ and $u_4$ on the

calibration camera image 300F are estimated. Combining the results of this estimation with the above-mentioned restraining conditions makes it possible to determine the positions of the characteristic points 313 and 314.

Instead, the distance $d_B$ between the characteristic points 323 and 324 on the calibration camera image 300F is determined; the characteristic point 313 is estimated to be located at a distance of $d_B$ from the characteristic point 312, and the characteristic point 314 is estimated to be located at a distance of $d_B$ from the characteristic point 311.

Thereafter, based on the estimated positions of the characteristic points 313 and 314, the direction and distance in and over which to move the calibration pattern A2 are derived. The direction points from the characteristic point 313 to the characteristic point 312; since, however, indicating the direction on a continuous scale may rather make it difficult for the operator to grasp the direction to move it, the direction pointing from the characteristic point 313 to the characteristic point 312 is quantized into, for example, four steps corresponding to front, rear, left, and right directions. In the example under discussion, the direction pointing from the characteristic point 313 to the characteristic point 312 is the rightward direction. Here, the front, rear, left, and right directions denote those directions on the ground plane as seen from the driver's seat of the vehicle 100. The driving assistance system previously knows the correspondence between those front, rear, left, and right directions and different directions on the camera images. The number of steps into which the direction is quantized may be other than four (for example, eight).

The distances from the characteristic points 313 and 314 to the edge of the calibration camera image 300F (as measured on the image) are determined, and based on these distances, the distance in the real space over which the calibration pattern A2 needs to be moved to bring the entire calibration pattern A2 within the shooting region of the camera 1F is derived. At this time, to convert a distance on the image to a distance in the real space, a conversion coefficient is used. This conversion coefficient may be previously stored in the driving assistance system, or may be determined based on the calibration pattern shape information and the distance $d_A$ between the characteristic points 311 and 312 (or the distance $d_B$ between the characteristic points 323 and 324). As described previously, the shape (including size) of the calibration patterns in the real space is defined by the calibration pattern shape information.

Subsequently to step S14, at step S15, the distance and direction determined at step S 14 are, along with the name of the calibration pattern to be moved, indicated by sound to the operator, and then a return is made to step S11. When the distance and direction determined at step S14 are 50 cm and the rightward direction, respectively, and the calibration pattern to be moved is the calibration pattern A2, then an instruction like "move the front left pattern 50 cm rightward" is given by sound to the operator. Fig. 15 is a conceptual diagram of the processing at step S 15, showing the sound indication in a visualized form. So that indications like this may be given at regular time intervals, the loop processing at steps S11 through S15 is executed repeatedly.

This permits the operator to complete the arrangement of the calibration patterns correctly and easily without viewing the camera images, and thus helps alleviate the trouble of calibration operation.

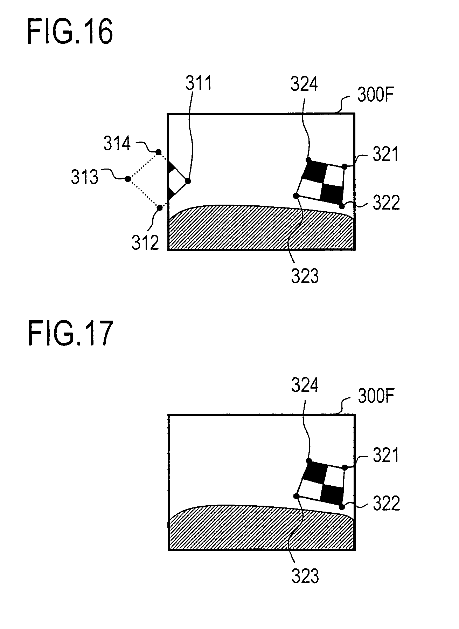

In the example shown in Fig. 14, two characteristic points 311 and 312 of the calibration pattern A2 appear on the calibration camera image 300F; by contrast, if, as shown in Fig. 16, the only characteristic point of the calibration pattern A2 detected from the calibration camera image 300F is the characteristic point 311, the positions of the characteristic points 312 to 314 as undetected characteristic points cannot be estimated accurately. Even then, since the shape of the calibration pattern is known, when one characteristic point is detected, the direction in which the other three characteristic points are located can be estimated roughly. Specifically, when, as shown in Fig. 16, one characteristic point is detected in a left-end part within the calibration camera image 300F, the other three characteristic points should be located outside, and to the left of, the shooting region of the camera 1F. Moreover, when only one characteristic point 311 of the calibration pattern A2 is detected, a larger part of the calibration pattern A2 is estimated to lie outside the shooting region of the camera 1F, and accordingly the distance over which to move the calibration pattern A2 is set to be about equal to the length of one side of the calibration pattern A2 in the real space.

Thus, in such a case, preferably, the direction to be determined at step S14 is set to be the rightward direction, and the distance to be determined at step S14 is set to be about equal to one side of the calibration pattern A2 in the real space.

There may even be cases where, while the calibration pattern A2 appears in the calibration camera image 300L (see Fig. 12(b)), as shown in Fig. 17, none of the characteristic points of the calibration pattern A2 is detected from the calibration camera image 300F. In such cases, preferably, the direction in which to move the calibration pattern A2 is estimated based on the positional relationship between the cameras 1F and 1L. When the cameras 1F and 1L are installed in a positional relationship as shown in Fig. 6, and in addition the calibration pattern A2 only appears within the calibration camera image 300L, it is likely that moving the calibration pattern A2 upward or obliquely rightward-upward will bring part or the whole of the calibration pattern A2 within the shooting region of the camera 1F. Accordingly, in such a case, the direction to be determined at step S 14 is set to be the rightward or obliquely rightward-upward direction. It is however difficult to estimate the distance over which to move the calibration pattern A2, and therefore, for example, the distance to be determined at step S14 is set to be a predetermined fixed distance (say, 50 cm).

<<Example 2»

The indications given at steps S 15 and 16 may be realized, instead of by sound output, by video display. Such video display is done on the display device 11 in Fig. 5, or on any other display device. A practical example in which indications are given by video display as just mentioned will now be taken up as Example 2. Example 2 differs from Example 1 only in that it uses video display during the operation for determining the arrangement positions of the calibration patterns, and is in other respects the same as Example 1. Accordingly, the following description will only discuss differences from Example 1.

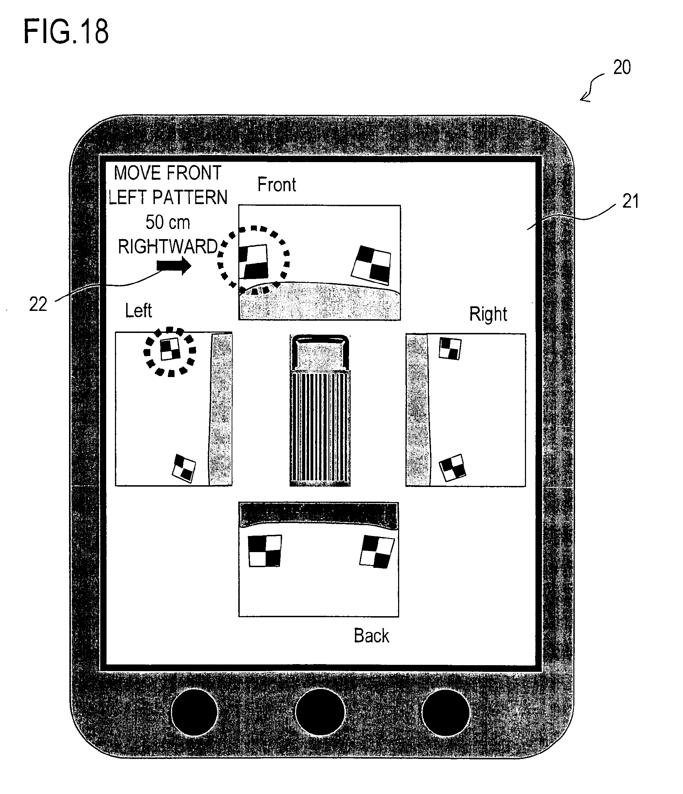

Fig. 18 is an external plan view of a portable terminal device 20 to be carried around by the operator during camera calibration. The portable terminal device 20 is provided with a display device (video display device) comprising a liquid crystal display panel or the like, and the reference sign 21 identifies the display screen of the display device. The portable terminal device 20 may be any portable terminal device provided with a display device and equipped with wireless communication capabilities; it is, for example, a cellular phone or a personal data assistant (PDA). While performing the operation for arranging the calibration patterns, the operator can view the display screen 21 of the display device of the portable terminal device 20.

The main controller 10 in Fig. 5 is capable of wireless communication with the portable terminal device 20. The main controller 10 wirelessly transmits the image data of the calibration camera images acquired at step S11 in Fig. 11 to the portable terminal device 20, and the portable terminal device 20 displays the calibration camera images on the display screen 21. In the example shown in Fig. 18, around an illustration of the vehicle 100, a total of four calibration camera images from the individual cameras are displayed at corresponding positions on the display screen 21. As described previously, the calibration camera images are acquired at a predetermined cycle, and accordingly what is displayed on the display screen 21 is updated at regular time intervals.

The main controller 10 executes the processing at steps S12 through S 14 in Fig. 11, and at step S15 makes visible on the display screen 21 the instruction to be indicated as to how to move the calibration patterns. Specifically, the main controller 10 wirelessly transmits the necessary data to the portable terminal device 20 to make visible on the display screen 21 which calibration pattern to move in what direction and over what distance. For example, when the distance and direction determined at step S14 are 50 cm and the rightward direction, respectively, and in addition the calibration pattern to be moved is the calibration pattern A2, the main controller 10 wirelessly transmits the necessary data to the portable terminal device 20 so that a message like "move the front left pattern 50 cm rightward" is displayed on the display screen 21. At this time, as shown in Fig. 18, a mark that makes the calibration pattern A2 visually distinguishable from the other calibration patterns on the display screen 21 may be displayed in a superimposed fashion. In the example shown in Fig. 18, the calibration pattern A2 on the display screen 21 is encircled in broken-line circles. In addition, an arrow 22 indicating the direction in which to move the calibration pattern may also be displayed on the display screen 21 in a superimposed fashion.

While the loop processing at steps S11 to S15 in Fig. 11 is repeated, if there is a change in the instruction, the instruction displayed on the display screen 21 is updated.

When an advance is made from step S13 to step S16 in Fig. 11, an indication of the completion of arrangement is given on the display screen 21. Specifically, at step S 16, the main controller 10 wirelessly transmits the necessary data to the portable terminal device 20 so that a message notifying the operator of the completion of the arrangement of the calibration patterns is displayed on the display screen 21.

In this way, using the portable terminal device 20, the operator can, while performing the operation of arranging the calibration patterns, view the direction and distance in and over which to move the calibration patterns along with the positional relationship among the camera images. This increases the efficiency of the operation of arranging the calibration patterns, and reduces the trouble of calibration operation.

In a case where the portable terminal device 20 is provided with a sound output device (unillustrated) that can output sound, sound output may be used in combination to give the indications at steps S15 and 16. Specifically, when the distance and direction determined at step S14 are 50 cm and the rightward direction, respectively, and in addition the calibration pattern to be moved is the calibration pattern A2, then at step S15, the main controller 10 wirelessly transmits the necessary data to the portable terminal device 20 so that a message like "move the front left pattern 50 cm rightward" is displayed on the display screen 21 and a similar message is outputted as sound from the sound output device. Likewise, at step S16, the main controller 10 wirelessly transmits the necessary data to the portable terminal device 20 so that a message notifying the operator of the completion of the arrangement of the calibration patterns is displayed on the display screen 21 and a similar message is outputted as sound from the sound output device.

Instead, video output may be omitted so that the indications at steps S15 and S 16 are given solely by sound output from the portable terminal device 20.

<<Example 3»

Next, Example 3 will be described. Example 3 deals with block diagrams of the blocks concerned with the processing for determining the arrangement positions of calibration patterns.

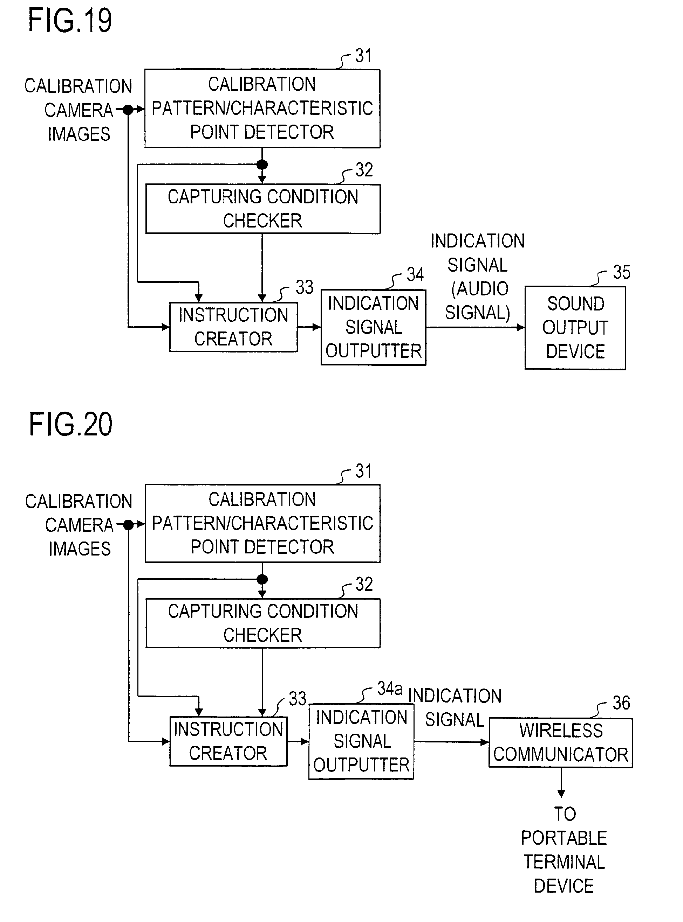

Fig. 19 is a block diagram, corresponding to Example 1, of the blocks concerned with the processing for determining the arrangement positions of the calibration patterns. The blocks identified by the reference signs 31 to 34 are provided in the main controller 10 in Fig. 5. A sound output device 35 may be grasped as a device within the driving assistance system, or as a device external to the driving assistance system. The blocks identified by the reference signs 31 and 34 may be considered to constitute a camera calibration device. The sound output device 35 may be grasped as a device within the camera calibration device, or as a device external to the camera calibration device.

A calibration pattern/characteristic point detector 31 executes the processing at step S12 based on the calibration camera images acquired at step S11 in Fig. 11. Specifically, it detects calibration patterns and characteristic points from the calibration camera images. A capturing condition checker 32 performs the processing at step S13 based on the results of the detection by the calibration pattern/characteristic point detector 31, and checks how the individual cameras are capturing the calibration patterns.

Based on the results of the detection by the calibration pattern/characteristic point detector 31 and the results of the checking by the capturing condition checker 32 (that is, the results of the processing at steps S12 and S13), an instruction creator 33, in concert with an indication signal outputter 34 and the sound output device 35, performs the processing at steps S14 and 15, or the processing at step S16. If a given calibration pattern is not being captured by both of the two cameras that should capture it, the instruction creator 33 performs the processing at step S14 to create an instruction to bring that calibration pattern within the corresponding common shooting region so that it is captured by both of the camera. The instruction includes the direction and distance in and over which to move the calibration pattern. The indication signal outputter 34 creates an indication signal for notifying the operator of the instruction, and feeds it to the sound output device 35. The indication signal here is an audio signal, and the sound output device 35, which comprises a speaker and the like, outputs the instruction as sound. In a case where the processing at step S16 is performed, the instruction creator 33 makes the indication signal outputter 34 output an indication signal (audio signal) for notifying the operator of the completion of the arrangement of the calibration patterns. Thus, the sound output device 35 outputs the corresponding message as sound.

Fig. 20 is a block diagram, corresponding to Example 2, of the blocks concerned with the processing for determining the arrangement positions of the calibration patterns. The blocks identified by the reference signs 31 to 33, 34a, and 36 are provided in the main controller 10 in Fig. 5. The blocks identified by the reference signs 31 to 33 are the same as those shown in Fig. 19. The blocks identified by the reference signs 31 to 33, 34a, and 36 may be considered to constitute a camera calibration device.

Based on the results of the detection by the calibration pattern/characteristic point detector 31 and the results of the checking by the capturing condition checker 32 (that is, the results of the processing at steps S12 and S13), the instruction creator 33, in concert with an indication signal outputter 34a and a wireless communicator 36, and also with the portable terminal device 20 shown in Fig. 18, performs the processing at steps S14 and S15, or the processing at step S 16. The indication signal outputter 34a creates an indication signal for notifying the operator of the instruction created by the instruction creator 33; the wireless communicator 36 converts the indication signal to a wireless signal, and wirelessly transmits it to the portable terminal device 20. Thus, the indication mentioned with regard to Example 2 is given on the portable terminal device 20.

<<Variations and Modifications>>

The specific values given in the description above are merely examples, which, needless to say, may be modified to any other values. In connection with the embodiments described above, modified examples or supplementary explanations applicable to them will be given below in Notes 1 to 4. Unless inconsistent, any part of the contents of these notes may be combined with any other.

[Note 1]

To perform planar projection transformation, four characteristic points are needed between an image before transformation and an image after transformation. With this taken into consideration, in the embodiments described above, a square shape with four characteristic points is adopted as an example of the shape of calibration patterns. The shape of calibration patterns, however, does not necessarily have to be square.

[Note 2]

Bird's-eye view images mentioned above correspond to images obtained by projecting camera images onto the ground plane. That is, in the embodiments described above, an all-around bird's-eye view image is generated by projecting onto the ground plane and synthesizing individual camera images. The plane onto which to project individual camera images may be any predetermined plane other than the ground plane (for example, a predetermined flat plane).

[Note 3]

Embodiments of the invention have been described with a driving assistance system employing cameras 1F, 1R, 1L, and 1B as vehicle-mounted cameras taken up as an example. The cameras to be connected to the main controller 10, however, may be installed elsewhere than on a vehicle. Specifically, for example, the invention finds application also in surveillance systems installed in buildings and the like. In surveillance systems of this type, as in the embodiments described above, camera images from a plurality of cameras are projected onto a predetermined plane and synthesized so that a synthesized image is displayed on a display device. For the projection and synthesis here, a camera calibration technique according to the invention is applied.

[Note 4]

The functions of the main controller 10 in Fig. 5 may be realized with hardware, software, or a combination of hardware and software. Part or all of the factions realized by the main controller 10 may be prepared in the form of a software program so that, when the software program is run on a computer, part of all of those functions are realized. In particular, the functions of the blocks identified by the reference signs 31 to 33 in Fig. 19 or 20 may be realized with hardware, software, or a combination of hardware and software, and part or all of those functions may be prepared in the form of a software program so that, when the software program is run on a computer, part of all of those functions are realized.

**Claims**

1.  A camera calibration device that performs camera calibration for projecting on a predetermined plane and synthesizing a plurality of camera images from a plurality of cameras based on results of shooting, by the plurality of cameras, of a calibration pattern to be arranged in a common shooting region between the plurality of cameras, the camera calibration device comprising:

    a checker which, based on the results of shooting, checks arrangement condition of the calibration pattern in the common shooting region; and
    an indication signal outputter which outputs an indication signal for indicating information according to a result of checking by the checker to outside.

2.  The camera calibration device according to claim 1, wherein
    when the camera images obtained from the cameras during the camera calibration are called calibration camera images,
    the checker checks, based on the calibration camera images, whether or not the calibration pattern is being captured by the plurality of cameras.

3.  The camera calibration device according to claim 2, wherein
    if the checker judges that the calibration pattern is not being captured by the plurality of cameras, the checker creates, based on the calibration camera images, an instruction for bringing the calibration pattern within the common shooting region so that the calibration pattern is captured by the plurality of cameras, and
    the indication signal outputter outputs, as the indication signal, a signal for indicating, as the information, the instruction to outside.

4.  The camera calibration device according to any one of claims 1 to 3,
    wherein the indication signal is fed to a sound output device so that an indication as to the information is given by sound output.

5.  The camera calibration device according to any one of claims 1 to 3,

wherein the indication signal is fed to a video display device so that an indication as to the information is given by video display.

6. The camera calibration device according to any one of claims 1 to 3, further comprising:

a wireless communicator which wirelessly communicates the indication signal to a portable terminal device,

wherein an indication as to the information is given on the portable terminal device by at least one of sound output and video display.

7. A vehicle furnished with a plurality of cameras, an image synthesizer which generates a synthesized image by protecting onto a predetermined plane and synthesizing a plurality of camera images from the plurality of cameras, and a video display device which displays the synthesized image,
wherein the image synthesizer projects and synthesizes the plurality of camera images based on a result of camera calibration by the camera calibration device according to any one of claims 1 to 3.

8. A camera calibration method for performing camera calibration for projecting on a predetermined plane and synthesizing a plurality of camera images from a plurality of cameras based on results of shooting, by the plurality of cameras, of a calibration pattern to be arranged in a common shooting region between the plurality of cameras, the camera calibration method comprising:

checking, based on the results of shooting, arrangement condition of the calibration pattern in the common shooting region, and indicating information according to a result of the checking to outside.

FIG.1

FIG.2

# FIG.3

2F

(a)

2L

(b)

2B

(c)

2R

(d)

# FIG.4

# FIG.5

## FIG.6

## FIG.7

FIG.8

50F

A2

202

A2

50L

A4

204

A4

A1

201

A1

50R

A3

203

A3

50B

FIG.9

ALL-AROUND BIRD'S-EYE
VIEW IMAGE

# FIG.10

S1 | ACQUIRE CAMERA IMAGES FROM INDIVIDUAL CAMERAS

S2 | DETERMINE HOMOGRAPHY MATRICES $H_n$ BASED ON CALIBRATION PATTERNS ON CAMERA IMAGES

S3 | USING HOMOGRAPHY MATRICES $H_n$, PERFORM BIRD'-EYE VIEW TRANSFORMATION ON INDIVIDUAL CAMERA IMAGES

S4 | USING CORRESPONDENCE OF CALIBRATION PATTERNS, PERFORM SOLID BODY TRANSFORMATION ON INDIVIDUAL BIRD'-EYE-VIEW-TRANSFORMED IMAGES TO DETERMINE HOMOGRAPHY MATRICES $H_n{}'$

# FIG.11

OPERATOR ARRANGES CALIBRATION PATTERNS

S11 | ACQUIRE CALIBRATION CAMERA IMAGES FROM CAMERAS

S12 | DETECT CALIBRATION PATTERNS AND CHARACTERISTIC POINTS FROM CALIBRATION CAMERA IMAGES

S13 | DO ADJACENT CAMERAS BOTH CAPTURE CORRESPONDING CALIBRATION PATTERN?

Y

N

S16 | INDICATE COMPLETION OF ARRANGEMENT

S14 | DETERMINE DIRECTION AND DISTANCE TO MOVE CALIBRATION PATTERNS

S15 | INDICATE DIRECTION AND DISTANCE TO MOVE CALIBRATION PATTERNS (INDICATE INSTRUCTIONS)

# FIG.12

FRONT CAMERA
IMAGE ⌐ 300F

A2

A1

(a)

LEFT CAMERA
IMAGE ⌐ 300L

A4

A2

(b)

REAR CAMERA
IMAGE ⌐ 300B

A3

A4

(c)

RIGHT CAMERA
IMAGE ⌐ 300R

A1

A3

(d)

# FIG.13

FRONT CAMERA IMAGE — 300F

BACKGROUND IMAGE — 301F

DIFFERENTIAL IMAGE — 302F

EDGE EXTRACTION ETC.

311  324  300F
321
322
312  323

EP 2 200 311 A1

## FIG.14

## FIG.15

♪ MOVE FRONT LEFT
PATTERN 50 cm RIGHTWARD

FIG.16

FIG.17

FIG.18

## FIG.19

CALIBRATION
CAMERA
IMAGES

CALIBRATION
PATTERN/CHARACTERISTIC
POINT DETECTOR ⌐31

CAPTURING CONDITION
CHECKER ⌐32

INSTRUCTION
CREATOR ⌐33

INDICATION
SIGNAL
OUTPUTTER ⌐34

INDICATION
SIGNAL
(AUDIO
SIGNAL)

SOUND
OUTPUT
DEVICE ⌐35

## FIG.20

CALIBRATION
CAMERA
IMAGES

CALIBRATION
PATTERN/CHARACTERISTIC
POINT DETECTOR ⌐31

CAPTURING CONDITION
CHECKER ⌐32

INSTRUCTION
CREATOR ⌐33

INDICATION
SIGNAL
OUTPUTTER ⌐34a

INDICATION
SIGNAL

WIRELESS
COMMUNICATOR ⌐36

TO
PORTABLE
TERMINAL
DEVICE

FIG.21

1F

1L        1R

1B

FIG.22

1F        1L

FIG.23

ALL-AROUND BIRD'S-EYE
VIEW IMAGE

FRONT CAMERA
BIRD'S-EYE
VIEW
IMAGE

LEFT
CAMERA
BIRD'S-
EYE
VIEW
IMAGE

RIGHT
CAMERA
BIRD'S-
EYE
VIEW
IMAGE

REAR
CAMERA
BIRD'S-EYE
VIEW IMAGE

FIG.24

<table>
<tr><td colspan="2">**INTERNATIONAL SEARCH REPORT**</td><td>International application No.<br>PCT/JP2008/067151</td></tr>
</table>

**A. CLASSIFICATION OF SUBJECT MATTER**
*H04N7/18*(2006.01)i, *B60R1/00*(2006.01)i, *B60R11/02*(2006.01)i, *G06T1/00* (2006.01)i

According to International Patent Classification (IPC) or to both national classification and IPC

**B. FIELDS SEARCHED**

Minimum documentation searched (classification system followed by classification symbols)
H04N7/18, B60R1/00, B60R11/02, G06T1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-135765 A (Matsushita Electric Industrial Co., Ltd.), 10 May, 2002 (10.05.02), Par. Nos. [0020] to [0285]; Figs. 1 to 42 & US 7307655 B1 & EP 1115250 A1 & WO 2000/007373 A1 | 1-8 |
| A | JP 2005-257510 A (Alpine Electronics, Inc.), 22 September, 2005 (22.09.05), Par. Nos. [0011] to [0035]; Figs. 1 to 6 (Family: none) | 1-8 |
| A | JP 2004-334819 A (Toshiba Corp.), 25 November, 2004 (25.11.04), Par. Nos. [0038] to [0118]; Figs. 1 to 13 & US 2004/0234124 A1 | 1-8 |

☒ Further documents are listed in the continuation of Box C.   ☐ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>08 December, 2008 (08.12.08) | Date of mailing of the international search report<br>22 December, 2008 (22.12.08) |
|---|---|
| Name and mailing address of the ISA/<br>Japanese Patent Office | Authorized officer |
| Facsimile No. | Telephone No. |

Form PCT/ISA/210 (second sheet) (April 2007)

<div align="center">**INTERNATIONAL SEARCH REPORT**</div>

| | International application No. |
|---|---|
| | PCT/JP2008/067151 |

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2001-285681 A (Matsushita Electric Industrial Co., Ltd.), 12 October, 2001 (12.10.01), Par. Nos. [0021] to [0105]; Figs. 1 to 22 (Family: none) | 1-8 |
| A | JP 2006-48451 A (Toshiba Corp.), 16 February, 2006 (16.02.06), Par. Nos. [0018] to [0088]; Figs. 1 to 12 & US 2006/0029255 A1　& EP 1623875 A1 & CN 1731450 A | 1-8 |
| A | JP 2006-148745 A (Aisin Seiki Co., Ltd.), 08 June, 2006 (08.06.06), Par. Nos. [0019] to [0086]; Figs. 1 to 20 & US 2008/0031514 A1　& EP 1816869 A1 & WO 2006/057147 A1　& KR 10-2007-0064371 A & CN 101065969 A | 1-8 |
| A | JP 8-276787 A (Suzuki Motor Corp.), 22 October, 1996 (22.10.96), Par. Nos. [0021] to [0063]; Figs. 1 to 18 (Family: none) | 1-8 |
| A | JP 8-16999 A (Hitachi, Ltd.), 19 January, 1996 (19.01.96), Par. Nos. [0011] to [0028]; Figs. 1 to 15 & US 5850254 A　& EP 691599 A2 & DE 69514580 D　& DE 69514580 T | 1-8 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3372944 B
- JP 2004235986 A
- JP 2006287892 A
- JP 2004342067 A